# EUROPEAN PATENT APPLICATION

(11) **EP 2 843 975 A1**
(43) Date of publication of application: **04.03.2015**
(21) Application number: 13781999.1
(22) Date of filing: 25.04.2013
(51) Int. Cl.: H04W 4/02, G06Q 30/02

(54) **MOBILE TERMINAL AND DIRECT SERVICE-PROVIDING METHOD THEREFOR**

(30) Priority: 25.04.2012 KR 20120043416
(71) Applicant: Son, Yong Seog, Gyeonggi-do 446-556 (KR)
(72) Inventor: Son, Yong Seog, Gyeonggi-do 446-556 (KR)
(74) Representative: Regimbeau
(86) International application number: PCT/KR2013/003568
(87) International publication number: WO 2013/162303

(57) **Abstract**

Disclosed are a mobile terminal and a direct service providing method thereof. Once a user enters any place, the mobile terminal automatically displays, on a screen, a program screen or a web page required at the place, based on unique identification information of a communication connection device received from a direct service server, or based on position information of the user. This can allow the user to process various types of works in a more convenient manner.

## Description

### TECHNICAL FIELD

The present invention relates to customized service of a mobile terminal, and more particularly, to a mobile terminal capable of automatically installing, executing and operating programs related to a corresponding region when a user enters the region, and a direct service providing method thereof.

### BACKGROUND ART

Generally, a mobile terminal, a small and light device, provides various functions as well as a basic communication function. Examples of such functions include data and voice communications, capturing images and video via a camera, recording audio, playing music files via a speaker system, and displaying images and video on a display. Some mobile terminals include additional functionality which supports game playing, while other terminals are configured as multimedia players.

As smart phones are widely used, various attempts have been made to support and develop functions of the mobile terminals. Such attempts include not only a structural change and improvement of the mobile terminals, but also improvement by hardware or software.

In recently-used information technology equipment (i.e., a mobile terminal), various application programs (applications) installed by a provider or downloaded by a user are used. However, such various application programs and data relevant thereto are different according to a place where the mobile terminal is used (e.g., bank, cinema, museum and so on).

For wide utilization of the mobile terminal, a user should be pre-install (set up in advance) application programs required at any (arbitrary) place, or should download to set up them at a corresponding place each time. In this case, a storage area to be consumed may be undesirably increased, or a user's difficulty and time waste may be caused since programs are installed through a plurality of steps.

Further, if the application programs are provided in the form of web applications or home pages, a user should firstly execute a web browser by searching for an icon for the web browser. Then the user should access an initial screen by inputting a corresponding web server address. If necessary, the user should undergo a log-in procedure to search for a screen for inputting information related to a current place (e.g., bank, cinema, museum and so on). Then the user should input desired information (reservation of deposit or withdrawal or ticketing), thereby acquiring required information. This may cause the user's difficulty in using information.

### DISCLOSURE OF THE INVENTION

Therefore, an object of the present invention is to provide a mobile terminal capable of automatically providing applications and information required at a user's current position without having an additional manipulation, and a direct service providing method thereof.

Another object of the present invention is to provide a mobile terminal capable of being provided with direct service by accessing a direct service server which exists at any position, and a direct service providing method thereof.

To achieve these and other advantages and in accordance with the purpose of the present invention, as embodied and broadly described herein, there is provided a direct service providing method of a mobile terminal, the method including: when the mobile terminal enters a specific place, determining whether the specific place is a direct service area or not; when the specific place is a direct service area as a result of the determination, accessing a direct service server; and receiving direct service related to the specific place, from the accessed direct service server.

The step of receiving direct service may include: receiving a program related to a current place from the accessed direct service server, and automatically displaying the program on a screen; and providing direct service on the displayed program screen, based on a user's input and position.

The place may be a space having a predetermined network area, and include a building, a performance arena, a cinema, a public office, a bank and a hospital.

According to another aspect of the present invention, there is provided a direct service providing method of a mobile terminal, the method including: when the mobile terminal enters a specific place, sensing a communication connection device; transmitting unique identification information and additional information of the sensed communication connection device, to a direct service server; receiving a program screen or a web page required at the current place from the direct service server, and displaying it based on the unique identification information; and providing direct service on the displayed program screen or web page, according to a user's input and position.

### [Advantageous Effects]

Firstly, once a user enters any place, the mobile terminal automatically displays, on a screen, a program screen or a web page required at the place, based on unique identification information of a communication connection device received from a direct service server, or based on position information of the user. This can allow the user to process various types of works in a more convenient manner.

Secondly, when programs or data provided from the direct service server are stored, the programs or data are automatically deleted according to predetermined conditions (e.g., order that a usage time point is long before, order that a usage frequency is low, etc.). When the mobile terminal is out of a specific place, a message inquiring whether to finally store a corresponding application or not is output. This can allow a storage space to be utilized in a more efficient manner.

Further, as the communication connection device and the direct service server are implemented as a single communication module, costs can be reduced, the system can have a minimized size, and installations and maintenance can be easily performed.

### BRIEF DESCRIPTION OF THE DRAWINGS

FIG. 1 is a configuration view of a direct service providing system according to the present invention;
FIG. 2 is a schematic configuration view of a mobile terminal according to the present invention;
FIG. 3 is a flowchart illustrating a first embodiment of a direct service method of a mobile terminal according to the present invention; and
FIG. 4 is a flowchart illustrating a second embodiment of a direct service method of a mobile terminal according to the present invention.

### MODES FOR CARRYING OUT THE PREFERRED EMBODIMENTS

Reference will now be made in detail to the preferred embodiments of the present invention, examples of which are illustrated in the accompanying drawings. It will also be apparent to those skilled in the art that various modifications and variations can be made in the present invention without departing from the spirit or scope of the invention. Thus, it is intended that the present invention cover modifications and variations of this invention provided they come within the scope of the appended claims and their equivalents.

Description will now be given in detail according to the exemplary embodiments, with reference to the accompanying drawings. For the sake of brief description with reference to the drawings, the same or equivalent components will be provided with the same reference numbers, and description thereof will not be repeated. A suffix "module" or "unit" used for constituent elements disclosed in the following description is merely intended for easy description of the specification, and the suffix itself does not give any special meaning or function.

Recently, according to the government's long-term project for informatization, hardware for providing various information service and software related thereto are being provided not only in public offices, but also in buildings, banks, cinemas, etc. Further, as information technology equipment such as smart phones is developed, various services using such smart phones are ongoing according to users' various demands.

The present invention is to provide a one-stop direct service method capable of allowing a user to be more conveniently provided with desired service, by combining different information service provided from a one-stop place with various functions of information technology equipment such as mobile terminals and smart phones, in an organic and intelligent manner.

That is, the present invention provides a direct service method capable of allowing information technology equipment having a wired/wireless data communication function (hereinafter, will be referred to as a mobile terminal) which has entered any place to thus sense a communication connection device, to be immediately provided with a program screen or a web page required at the place without an additional manipulation, from a direct service server, based on unique identification information of the communication connection device. The any place is a space for forming a predetermined network region, which includes a building, a performance arena, a cinema, a public office, a bank, a hospital and so on.

Further, the present invention provides a direct service method capable of allowing a mobile terminal having a wired/wireless data communication function which has entered any place, to be provided with a direct service program and data required at the place, by directly accessing a direct service server (network server) installed at the place.

In the present invention, the "direct service" includes a series of information providing service, e.g., service for automatically installing or executing programs required at any place, service for automatically transmitting or receiving data required by a user at a corresponding place, or service for displaying a web page desired by a user at a corresponding place.

In the present invention, the "direct service" includes intelligent type information providing service capable of automatically providing a user with applications (or data) related to a specific place when the user has entered the specific place, without an additional manipulation by the user, and capable of providing applications or data related to subsequent processes based on previous setting information on the specific place, the setting information which has been previously set by the user.

For direct service, the communication connection device provides unique identification information, and additional information includes information on whether a current place requires a user range limitation such as an adult certification, and information on whether a current place includes advertising and promotional materials.

In the present invention, direct service can be provided before/after or while a mobile terminal accesses a communication connection device which provides unique identification information. The reason is because the mobile terminal has a plurality of communication connection methods for communicating with the communication connection device. As the plurality of communication connection methods, not only wireless Internet technology such as wireless LAN (Wi-Fi), but also short-distance communication technology such as Bluetooth, RFID, IrDA, Ultra Wideband (UWB), ZigBee and Near Field Communication (NFC).

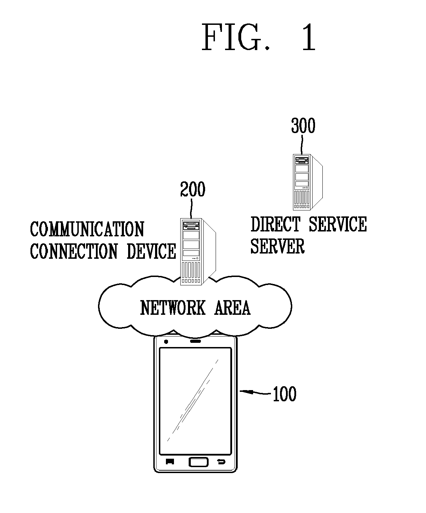

FIG. 1 is a configuration view of a direct service providing system according to the present invention.

As shown, a direct service system according to the present invention includes a mobile terminal 100 (user information technology equipment), one or more communication connection devices 200 installed at any place and configured to perform communication with the mobile terminal 100, and a direct service server (network server) 300 configured to provide direct service corresponding to a specific place or position based on position information of the mobile terminal, or based on unique identification information of the communication connection device 200 received from the mobile terminal 100.

The mobile terminal 100 may be implemented in various manners. For instance, the mobile terminal of the present invention may include a portable phone, a smart phone, a notebook computer, a tablet PC, a terminal for digital broadcasting, a personal digital assistant (PDA), a portable multimedia player (PMP), a navigation, etc.

The communication connection device 200 may be configured as a hub, a wired/wireless IP sharer, a wireless access point (AP), a Bluetooth device, a Zigbee device, a near field communication (NFC) device and a PC, which may be installed in at least one in number. The communication connection devices 200 may be individually implemented, or may be implemented as a single communication module by being integrated with a direct service server. However, it will be obvious to those skilled in the art that the following configuration may be also applicable to other communication connection devices except for a specific factor.

The direct service server 300 manages applications (programs and web pages) of direct service, member information and reservation information, and provides direct service corresponding to a specific place or position based on position information of the mobile terminal 100, or based on unique identification information of the communication connection device 200, the unique identification information received from the mobile terminal 100. The position information may be obtained through the communication connection device 200, or may be received from a GPS, or a sensor attached to each exhibit. Alternatively, the position information may be acquired through various methods.

In a case where the communication connection device 200 and the direct service server 300 are installed at a narrow place or in a small building, only the direct service server 300 is provided. In this case, the direct service server 300 includes most functions of the communication connection device 200. That is, for easy installation and maintenance as well as reduced costs and a small size, the communication connection device 200 and the direct service server 300 may be configured as a single communication module.

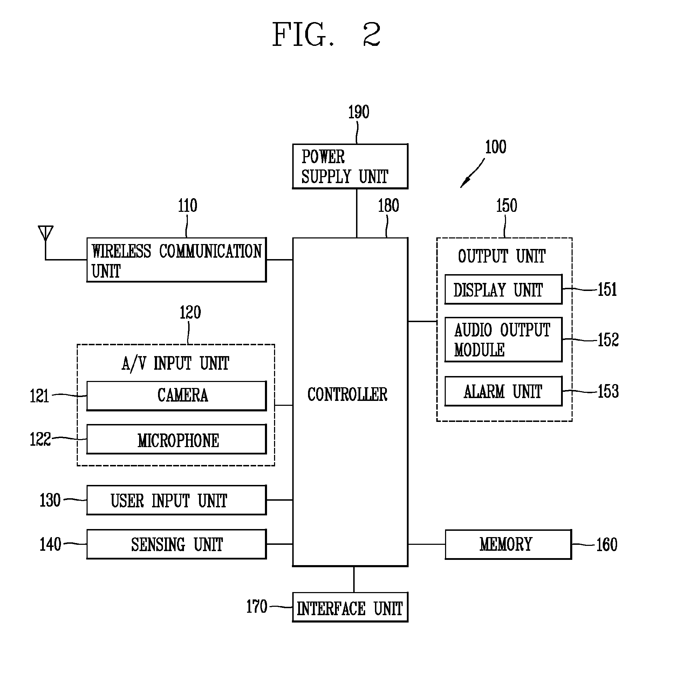

FIG. 2 is a schematic configuration view of the mobile terminal according to the present invention.

As shown in FIG. 2, the mobile terminal 100 includes a wireless communication unit 110, an Audio/Video (A/V) input unit 120, a user input unit 130, a sensing unit 140, an output unit 150, a memory 160, an interface unit 170, a controller 180, a power supply unit 190, etc.

The wireless communication unit 110 performs wireless communication between the mobile terminal 100 and a wireless communication system, or between the mobile terminal 100 and a communication connection device 200.

The A/V input unit 120, configured to input an audio signal or a video signal, may include a camera 121, a microphone 122, etc. The microphone 122 is used to input a voice command in a voice recognition mode.

The user input unit 130, part where a user inputs data for controlling an operation of the mobile terminal, may be implemented as a key pad, a dome switch, a touch pad, a jog wheel, a jog switch, etc.

The sensing unit 140 senses a status of the mobile terminal 100, such as a position of the mobile terminal 100, whether a user has contacted the mobile terminal 100 or not, an azimuth of the mobile terminal 100, and acceleration/deceleration of the mobile terminal 100, thereby generating a sensing signal for controlling an operation of the mobile terminal 100.

The interface unit 170 serves as an interface with various types of external devices that can be coupled to the mobile terminal 100. The interface unit 170, for example, may include any of wired or wireless headset ports, external power supply ports, wired or wireless data ports, memory card ports, ports for connecting a device having an identification module, audio input/output (I/O) ports, video I/O ports, earphone ports, and the like. The identification module is a chip which stores therein various types of information for authenticating a user right of the mobile terminal 100, which may include a subscriber identity module (SIM).

The output unit 150, configured to output an audio signal, a video signal or an alarm signal, includes a display unit 151, an audio output module 152 and an alarm unit 153.

The display unit 151 displays texts or image data for information or direct service processed by the mobile terminal 100. For instance, when the mobile terminal enters a specific place, the display unit 151 displays applications received from the communication connection device 200 of the specific place, or displays a user interface (UI) or a graphic user interface (GUI) related to direct service. Input to the display unit 151 includes a key input and a touch input, and the display unit 151 may be formed in two or more according to a configuration of the mobile terminal 100.

The audio output module 152 is generally configured to output various types of audio data or direct service data. Such audio data or direct service data may be obtained from any of a number of different sources, such that the audio data or direct service data may be received from the wireless communication unit 110 (including a short-range communication module and a wireless Internet module) or may have been stored in the memory 160. The audio data or direct service data may be output during modes such as a signal reception mode, a call mode, a record mode, a voice recognition mode, a broadcast reception mode, and the like. The audio output module 152 may also be implemented as a speaker, a buzzer, or the like.

The alarm unit 153 outputs a signal indicating an event (reception of a call signal and a message, a key signal input, and a touch input) has occurred from the mobile terminal 100, or indicating change of direct service. The alarm unit 153 may output a signal by vibration.

The memory 160 stores therein programs for processing and controlling the controller 180, direct service providing programs, data input by a user while direct service is being provided. The memory 160 temporarily stores therein applications and data related to direct service, and may be set to automatically delete the applications and data according to a user's selection when the user is out of a corresponding place.

The controller 180 controls an entire operation of the mobile terminal 100. For instance, the controller 180 executes controls and procedures related to a voice call, data communication, a video call, etc. Further, the controller 180 temporarily stores applications and data related to direct service in the memory 160, after receiving them from the communication connection device 200, and provides direct service by accessing the communication connection device 200.

The power supply unit 190, configured as a battery, receives an external power and an inner power, under control of the controller 180, thereby providing power to each component.

A direct service method by the direct service system according to the present invention will be explained in more detail with reference to the attached drawings.

Once a user enters a specific place, the user's mobile terminal may determine whether the specific place is a direct service area or not. The determination may be performed based on unique identification information of the communication connection device 200, or based on a server ID included in data (packet) broadcast by the direct service server 300.

### <Access to Direct Service Server>

If a specific place where a user has entered is a direct service area, the mobile terminal may access the direct service server 300, to thus be provided with current place-related direct service received from the direct service server 300.

In the present invention, a method of accessing a direct service server includes a first embodiment using unique identification information of the communication connection device 200, and a second embodiment to directly access the direct service server 300 by using a server ID included in data (packet) broadcast by the direct service server 300. The first and second embodiments may be applicable to a case where the communication connection device 200 and the direct service server 300 are separately configured, and to a case where the communication connection device 200 and the direct service server 300 are configured as a single communication module.

In the case where the communication connection device 200 and the direct service server 300 are separately configured, the first embodiment is mainly executed in a wide place or large building, whereas the second embodiment is mainly executed in a narrow place or small building. Thus, the direct service server 300 manages all operations without additionally having the communication connection device 200. However, the present invention is not limited to this. That is, even if there exists the communication connection device 200, the mobile terminal can access the direct service server 300 without using an identification number of the communication connection device 200.

On the other hand, if the communication connection device 200 and the direct service server 300 are configured as a single module, the system is installed to be operated at any place.

In the first embodiment, if a user enters any place, the controller 180 of the mobile terminal 100 receives unique identification information (ID) of the at least one communication connection device 200 installed at the place. Then the controller 180 transmits the received unique identification information to the direct service server, and is provided with required direct service. Detailed utilization examples are as follows.

The controller 180 recognizes one or more network names, Bluetooth device names, etc. which are named according to a specific regulation within a network area, thereby utilizing them to direct service. For instance, if a wireless network name such as "D national museum 01" or a Bluetooth device name is sensed on a predetermined network within a network area, the controller 180 transmits the unique identification information to the direct service server. Then the direct service server interprets "D" as a registered state to direct service, "national museum" as an installation place (or building name), and "01" as a place ID, thereby providing the mobile terminal 100 with direct service required at a corresponding place.

As another embodiment, in a case where the mobile terminal accesses a network by a TCP/IP method, the controller 180 may acquire identification information such as an IP address of a router of the network or an MAC address of a gateway device, thereby utilizing the identification information for direct service.

In the second embodiment, the mobile terminal 100 may be provided with direct service by directly accessing a direct service server which exists on a network connected at any place. In this case, unique identification information of the communication connection device 300 is not used. Detailed utilization examples are as follows.

The controller 180 may be provided with direct service by searching for devices (or equipment) which exist within a network area, and by accessing a device having a host name preset according to a pre-defined regulation. For instance, the controller 180 may be provided with direct service by accessing a direct service server having a word "_D_Server_" within a device name.

Alternatively, the controller 180 may be provided with direct service by searching devices which exist within a network area, and by accessing a device having a preset IP address. For instance, under an assumption that the last number of an IP address is '255' and the IP address of the mobile terminal is [192.168.10.100], the mobile terminal is provided with direct service by accessing a device having an IP address of [192.168.10.255], e.g., a computer.

Still alternatively, in a case where unique identification information of the communication connection device 200 contains a specific IP address, the controller 180 accesses the direct service server 300 by regarding the specific IP address as an IP address of the direct service server 300. This is an example to access the direct service server 300 using an IP address contained in unique identification information, not using unique identification information of the communication connection device 200, even if there exists the communication connection device 200. For instance, in a case where unique identification information of the communication connection device 200 sensed within a network area is "D 14.47.60.253", the controller 180 utilizes numbers between round brackets (14.47.60.253), as an IP address of the direct service server.

In the above manner, when a user enters a specific place, the controller 180 of the mobile terminal may determine whether the specific place provides direct service or not. The determination may be performed based on a server ID included in the communication connection device 200, or based on a server ID included in data (packet) broadcast by the direct service server 300.

In a case where a corresponding place provides direct service, the controller 180 of the mobile terminal accesses the direct service server 300 using a server ID of the communication connection device 200, thereby providing information to the direct service server 300. The information is related to the one or more communication devices 200, and has been searched at a user's current position.

Thus, the direct service server 300 checks a user's position based on communication device-related information received from the controller 180 of the mobile terminal, and then provides direct service corresponding to the user's position. The direct service server 300 may provide different direct service according to user, based on a user's preset information. For instance, in a case where users A and B have simultaneously entered a cinema, the direct service server 300 may provide the user A who has not made an advance purchase with a film advance purchase screen, whereas the direct service server 300 may provide the user B who has made an advance purchase with a ticketing screen.

In the present invention, the direct service server may utilize additional information of direct service, e.g., information on whether a current place requires a user range limitation such as an adult certification, and information on whether a current place includes advertising and promotional materials.

So far, it has been explained that the mobile terminal accesses the direct service server 300 for direct service. However, the direct service server 300 may access the mobile terminal for direct service.

That is, the communication connection device 200 can transmit unique identification information of the mobile terminal 100 to the direct service server 300 spontaneously or in response to a request from the direct service server 300. In this case, the mobile terminal 100 is in a state before/after access to the communication connection device 200, or is accessing the communication connection device 200. In this case, the direct service server 300 may provide direct service by accessing the communication connection device 200 based on the received information, or by accessing the mobile terminal 100 using other path.

Further, in case of providing direct service without using unique identification information of the communication connection device 200, the direct service server 300 may provide direct service using a current connection path or other path, like in a case where change of an accessed state of the mobile terminal has been sensed by the direct service server.

For instance, when a wireless AP senses change of information of mobile terminals positioned close thereto, the wireless AP transmits unique identification information related to itself and the mobile terminals to the direct service server 300, in an automatic manner or in response to a request from the direct service server 300. The direct service server 300 provides direct service by searching for a mobile terminal connected to the Internet through a 3G network, based on the received information.

Hereinafter, a direct service providing method according to the present invention will be explained.

The mobile terminal 100, the communication connection device 200 and the direct service server 300 are set to perform automatic access attempt within a network area. The communication connection device 200 and the direct service server 300 transmit identification information to the mobile terminal 100 for access of the mobile terminal 100.

### <Provision of Direct Service >

Hereinafter, will be explained an example to provide direct service through communication between the mobile terminal 100 and the direct service server 300 in a case where a user 1 visits a national museum.

In a case where a user 1 visits a national museum, an entire area of the national museum is set as a network area. Once the user 1 passes through a front gate of the national museum (enters the network area of the museum), the direct service server authenticates whether the user 1 is a user (member) registered to direct service, based on member information.

If the user 1 is a registered user as a result of the authentication, the direct service server transmits a museum application to the mobile terminal 100 (smart phone) of the user 1. On the contrary, if the user 1 is not a registered user as a result of the authentication, the direct service server transmits, to the mobile terminal 100, a payment window for charging with respect to direct service, such that the mobile terminal 100 displays the payment window. If the user 1 has completed payment with respect to the direct service on the payment window, the direct service server transmits the museum application to the mobile terminal 100 (smart phone) of the user 1. That is, a registered user is not additionally provided with a payment window, since the user's mobile terminal has been set to regularly pay with respect to direct service.

The transmitted museum application is received by the controller 180 through the wireless communication unit 110, and the controller 180 checks whether there exists the corresponding museum application. If there exists the corresponding museum application (a user has downloaded the corresponding museum application from a homepage or has stored it after a previous visit), the controller 180 abandons the received museum application. On the contrary, if there does not exist the corresponding museum application, the controller 180 stores the received museum application in the memory 160 and displays it on the display unit 151. For this end, the controller 180 may output a message inquiring whether to store the museum application or not. Especially, in a case where the user 1 has ever used the museum application, the controller 180 may selectively transmit a corresponding program.

After the user 1 has passed through the front gate of the national museum, a museum homepage is automatically displayed on a screen of the mobile terminal (smart phone), the homepage displaying information on exhibitions being held according to exhibition hall and viewable time.

The user 1 who has passed through the front gate may press a ticket reservation button for viewing "Egyptian relic exhibition". Then if the user 1 has arrived in front of a ticket office (box office), the direct service server 300 transmits information on ticketing, to the mobile terminal 100. The direct service server 300 checks position information of the user 1 based on information of the one or more communication connection devices 200 (unique identification information, device name, and signal strength), the information sensed and transmitted by the user 1's mobile terminal. Then the direct service server 300 transmits ticketing information corresponding to the position to the mobile terminal 100. The unique identification information includes a list of communication connection devices, a signal strength, whether direct service has been registered, a place name, and a place ID. For high accuracy of information transmission, the direct service server 300 transmits ticketing information to the mobile terminal 100 when position information of the communication connection device 200 satisfies a reference value, even if a plurality of information of the communication connection device 200 has been received.

Based on the received ticketing information, the mobile terminal 100 displays, on its screen, a reserved ticket for exhibition, a message indicating that a student discount has been automatically applied, and a micro payment button using the mobile terminal.

As the user 1 completes payment by pressing the micro payment using the mobile terminal, the user 1 needs not stand in a long queue in front of the ticket box. Rather, the user 1 can immediately enter an exhibition hall of the "Egyptian relic exhibition".

An entrance of the exhibition hall is installed with a gate similar to that of a subway entrance. The gate is automatically opened under control of the direct service server 300 when the user 1 approaches thereto.

Once the user 1 enters the exhibition hall of the "Egyptian relic exhibition", the controller 180 of the mobile terminal 100 obtains unique identification information of the communication connection device 200 installed in the exhibition hall, and then transmits it to the direct service server 300. Then the direct service server 300 provides the mobile terminal 100 with content, i.e., direct service corresponding to the "Egyptian relic exhibition". The content corresponding to the "Egyptian relic exhibition" includes video and audio data with respect to exhibits.

For instance, when the user 1 is in front of an Egyptian crown, the origin of the crown is output together with relevant images by voice, through a speaker.

Then if the user 1 who has completed all viewings moves toward the front gate of the museum, additional information, such as information on a special exhibition which will be held next month, is displayed on the screen. Finally, a message inquiring whether to store the museum application or not is displayed. The user 1 may delete the museum application when unnecessary, thereby effectively utilizing a space inside the memory 160.

Next, will be explained an example where a user 2 goes to a bean coffee shop near a house.

Once the user 2 enters a "bean coffee shop", the direct service server 300 transmits a direct service usage program to the mobile terminal (smart phone) 100 so that the mobile terminal 100 displays the program on the screen. The direct service usage program may be an order screen. If it is determined that the user 2 is a regular customer through the direct service server 300's search on information on the user 2, the direct service server 300 may immediately display, on the screen, a message inquiring "Would you like to order?" together with a photo of frequently-ordered espresso.

If the user 2 presses an 'OK' button, the direct service server 300 transmits a message indicating that a waiting number is 7, to the mobile terminal 100. If coffee is prepared, the direct service server 300 transmits a corresponding message. The controller 180 may output a different sound or melody when each message is transmitted. That is, for a message indicating a waiting number, the controller 180 may output a short alarm sound. On the contrary, for a message indicating that coffee has been completely prepared, the controller 180 may output a long alarm sound.

Thus, the user 2 may talk with a friend over the phone while waiting for coffee on an empty seat. If coffee is prepared during the call, the direct service server 300 transmits information indicating the state to the mobile terminal 100. Based on the information, a sweet melody is output through the audio output module 152 of the mobile terminal 100. And a message indicating that coffee is at a counter is displayed on the screen of the display unit 151.

If the user 2 leaves the bean coffee shop with taking the ordered coffee, additional information, i.e., a voice message "Next time, you can drink two cups of espresso using accumulated points." is output to the user 2's mobile terminal. And a message inquiring whether to store the direct service usage program or not is displayed. The user 2 may store the direct service usage program for later re-usage.

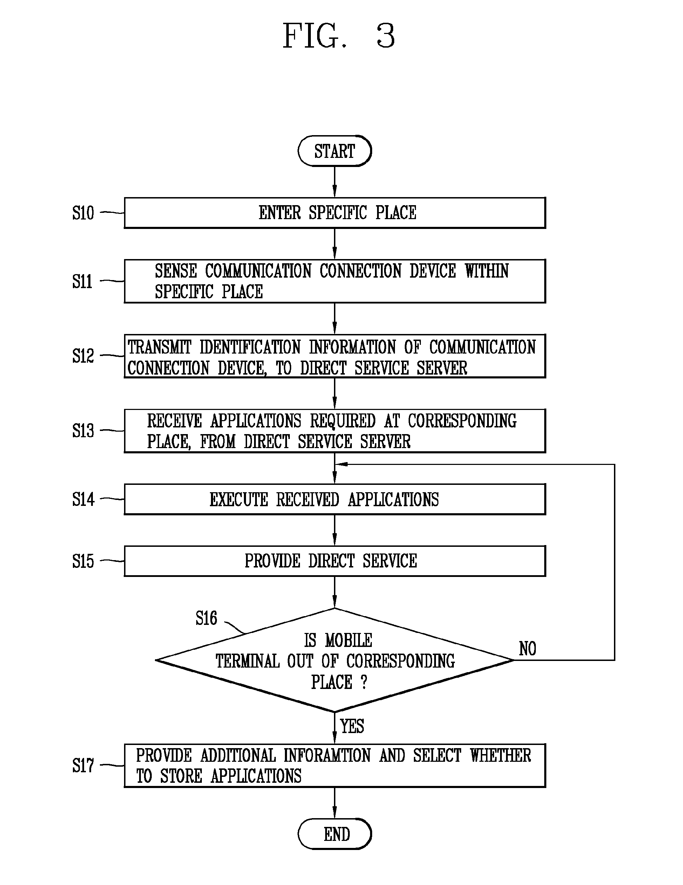

FIG. 3 is a flowchart illustrating a first embodiment of a direct service method of a mobile terminal according to the present invention. In the first embodiment, the communication connection device 200 and the direct service server 300 are separately provided.

If a user enters a specific place (i.e., a network area formed by a corresponding place) (S20), the controller 180 of the mobile terminal 100 senses unique identification information and additional information of the at least one communication connection device 200 (S11). The additional information includes information on whether a current place requires a user range limitation, and information on whether a current place includes advertising and promotional materials. Then the controller 180 transmits the sensed unique identification information and additional information, to the direct service server 300 (S12).

The communication connection device 200 may be positioned within or out of a corresponding place.

If a user (mobile terminal) enters a network formed by a predetermined place, the communication connection device 200 may sense the state. The communication connection device 200 transmits identification information of the mobile terminal to the direct service server 300, automatically or in response to periodic requests from the direct service server 300.

The direct service server 300 transmits applications required at a corresponding place (a general application, a web application and a home page) and data to the mobile terminal 100, using an identification number of the mobile terminal received from the communication connection device 200, or unique identification information and additional information received from the mobile terminal. The direct service server 300 may selectively provide a program or transceive (transmit and receive) data, based on a user's usage history on programs and data. That is, in a case where a user has ever used the same program, the direct service server 300 may activate the stored program (application).

Especially, in a case where the direct service server 300 has received identification information of the mobile terminal from the communication connection device 200, the direct service server 300 transmits applications required at a corresponding place (a general application, a web application and a home page) and data to the mobile terminal 100, through a preset communication channel.

The controller 180 of the mobile terminal 100 stores the received applications in the memory 160 (S13), and executes the received applications (S14). The controller 180 may display a message inquiring the user whether to install and execute programs, on an additional window. Especially, when a storage capacity is deficient, the controller 180 deletes already-used programs or data according to a regulation (e.g., order that an installation time point is long before, order that a usage frequency is low, etc.), thereby obtaining a storage space.

The controller 180 is provided with direct service related to the place based on unique identification information of the communication connection device 200, while communicating with the direct service server 300 (S15). The provided direct service is output through the output unit 150, in the form of video and audio (voice).

Then, if the user who has been completely provided with the direct service leaves the corresponding place, the direct service server 300 provides additional information related to the corresponding place to the mobile terminal 100. The controller 180 of the mobile terminal 100 outputs a predetermined message so that the user can select whether to delete the pre-stored applications or not.

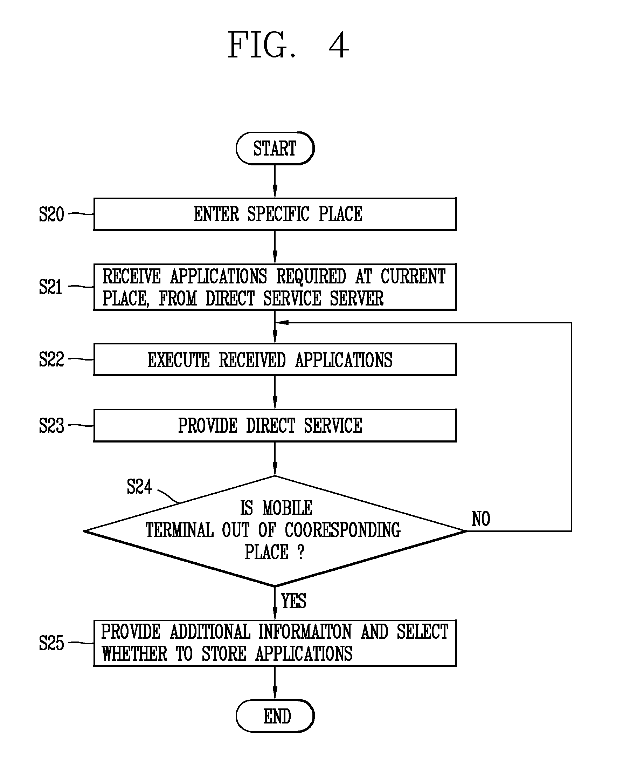

FIG. 4 is a flowchart illustrating a second embodiment of a direct service method of a mobile terminal according to the present invention. In the second embodiment, only the direct service server 300 is provided.

As shown in FIG. 4, if a user enters a specific place (i.e., a network area formed by a corresponding place) (S20), the controller 180 of the mobile terminal 100 accesses the direct service server 300 to thus receive applications required at the specific place, from the direct service server 300 (S21).

The controller 180 stores the received applications in the memory 160 and executes them (S22). If a storage capacity is deficient, the controller 180 deletes already-used programs or data according to a regulation (e.g., order that an installation time point is long before, order that a usage frequency is low, etc.), thereby obtaining a storage space.

The controller 180 is provided with direct service related to the place, while communicating with the direct service server 300 (S23). The provided direct service is output through the output unit 150, in the form of video and audio (voice). In this case, user's position information may be used.

For instance, if a specific user passes through an entrance gate of a company, the controller 180 may execute a management program to store attendance records (without displaying the program). If the specific user passes through an entrance gate of a bank, the controller 180 may execute applications required at the bank.

Then, if the user who has been completely provided with the direct service leaves the corresponding place, the controller 180 receives additional information related to the corresponding place from the direct service server 300, and displays the received information on the screen. Then, the controller 180 outputs a predetermined message so that the user can select whether to delete the pre-stored applications or not.

### [Industrial Applicability]

As aforementioned, once a user enters any place, the mobile terminal automatically displays, on the screen, a program screen or a web page required at the place, based on unique identification information of the communication connection device received from the direct service server, or based on position information of the user. This can allow the user to process various types of works in a more convenient manner.

Further, as the communication connection device and the direct service server are implemented as a single communication module, costs can be reduced, the system can have a minimized size, and installations and maintenance can be easily performed.

It will also be apparent to those skilled in the art that various modifications and variations can be made in the present invention without departing from the spirit or scope of the invention. Thus, it is intended that the present invention cover modifications and variations of this invention provided they come within the scope of the appended claims and their equivalents.

## Claims

1. A direct service providing method of a mobile terminal, the method comprising:
when the mobile terminal enters a specific place, determining whether the specific place is a direct service area or not;
when the specific place is a direct service area as a result of the determination, accessing a direct service server; and
receiving direct service related to the specific place, from the accessed direct service server.

2. The method of claim 1, wherein the step of receiving direct service includes:
receiving a program related to a current place from the accessed direct service server, and automatically displaying the program on a screen; and
providing direct service on the displayed program screen, based on a user's input and position,
wherein the place is a space having a predetermined network area, and includes a building, a performance arena, a cinema, a public office, a bank and a hospital, and
wherein the program screen includes a general application, a web application or a home page.

3. The method of claim 1, wherein the direct service server is accessed through a predetermined IP address or device name, and
wherein the program screen is differently displayed according to user, based on history information and reservation information.

4. The method of claim 1, wherein the direct service server automatically installs or executes programs required at any place, automatically transmits or receives data required at a corresponding place, or real time displays a program screen required at a corresponding place.

5. The method of claim 1, further comprising displaying additional information related to the corresponding place when the mobile terminal enters the specific place, and outputting a message inquiring whether to store the program screen or not, and
wherein the step of receiving direct service includes automatically executing a current place-related program received from the direct service server, and storing an execution result.

6. A direct service providing method of a mobile terminal, the method comprising:
when the mobile terminal enters a specific place, sensing a communication connection device;
transmitting unique identification information and additional information of the sensed communication connection device, to a direct service server;
receiving a program screen or a web page required at the current place from the direct service server, and displaying it based on the unique identification information; and
providing direct service on the displayed program screen or web page, according to a user's input and position.

7. The method of claim 6, wherein the communication connection device is configured as a hub, a wired/wireless IP sharer, a wireless access point (AP), a Bluetooth device, a Zigbee device, a near field communication (NFC) device and a PC, and is installed in at least one in number, and
wherein the communication connection device is individually implemented, or is implemented as a single communication module by being integrated with the direct service server.

8. The method of claim 6, wherein the unique identification information includes a list of communication connection devices, a signal strength, whether direct service has been registered, a place name, and a place ID.

9. The method of claim 6, wherein in a case where the mobile terminal accesses a network by a TCP/IP method, the unique identification information includes an IP address of a router or an MAC address of a gateway device.

10. The method of claim 6, wherein the program screen or the web page is differently displayed according to user, based on history information and reservation information, and
wherein the direct service server is accessed based on unique identification information of the communication connection device, or through a preset IP address or device name.

11. The method of claim 6, wherein the direct service includes service for automatically installing or executing programs required at any place, or service for automatically transmitting or receiving data required at a corresponding place, or service for real time displaying a desired program screen at a corresponding place.

12. The method of claim 6, wherein the additional information includes information on whether a current place requires a user range limitation, and information on whether a current place includes advertising and promotional materials.

13. The method of claim 6, further comprising:
automatically executing a current place-related program received from the direct service server, and storing attendance records; and
when the mobile terminal enters the specific place, displaying additional information related to the specific place, and outputting a message inquiring whether to finally store the program screen or not.
